# EUROPEAN PATENT APPLICATION

(11) **EP 1 610 272 A1**
(43) Date of publication of application: **28.12.2005**
(21) Application number: 04291607.2
(22) Date of filing: 25.06.2004
(51) Int. Cl.: G07F 7/10, G06F 12/14

(54) **Buffer protection in a portable security module**

(71) Applicant: Canal + Technologies, 75015 Paris (FR)
(72) Inventor: Abdelkrim, Nimour, 92320 Chatillon (FR); Brédy, Nicolas, 78000 Versailles (FR)
(74) Representative: Weihs, Bruno Konrad

(57) **Abstract**

A method for securing a portable security module for use with a decoding element, wherein the portable security module and the decoding element allow to descramble scrambled information, comprises encrypting with an encrypting key output data to be transmitted out of the portable security module (53, 606), writing as buffer data the encrypted output data into an input/output buffer of the portable security module (54, 607), decrypting the buffer data with a decrypting key (56, 610), the decrypting key allowing to decrypt data encrypted with the encrypting key, and transmitting the decrypted buffer data to an input/output port of the portable security module (57, 611).

## Description

### Background of Invention

### Field of the Invention

The invention relates generally to portable security modules adapted to descramble scrambled information.

### Background Art

Transmission of encrypted data is well-known in the field of pay TV systems, where scrambled audiovisual information is usually broadcast by terrestrial emitters, satellite or through a cable network to a number of subscribers, each subscriber possessing a decoder or receiver/decoder capable of descrambling the scrambled audiovisual information for subsequent viewing.

In a typical system, the scrambled audiovisual information may be descrambled using a control word. In order to try to improve the security of the system, the control word is usually changed every ten seconds or so. Every 10 seconds, each subscriber receives, in an ECM (Entitlement Control Message), the control word necessary to descramble the scrambled audiovisual information so as to permit viewing of the transmission.

The control word itself is encrypted by an exploitation key and transmitted in encrypted form in the ECM. The scrambled audiovisual information and the encrypted control word are received by a decoder, which in the case of a paid-up subscriber, has access to the exploitation key stored on a portable security module, e.g., a smart card, inserted in the decoder. The encrypted control word is decrypted using the exploitation key by the smartcard. The smartcard transmits the control word to the decoder. The scrambled audiovisual information is descrambled using the decrypted control word by the decoder. The decoder is indeed powerful enough to provide a real-time descrambling of the scrambled audiovisual information.

The exploitation key is itself periodically changed, e.g. every month or so. An EMM (Entitlement Management Message) is monthly received by the decoder and is transmitted in the smartcard. The EMM contains the exploitation key in an encoded form. A group key assigned to the smartcard enables to decode the encoded exploitation key.

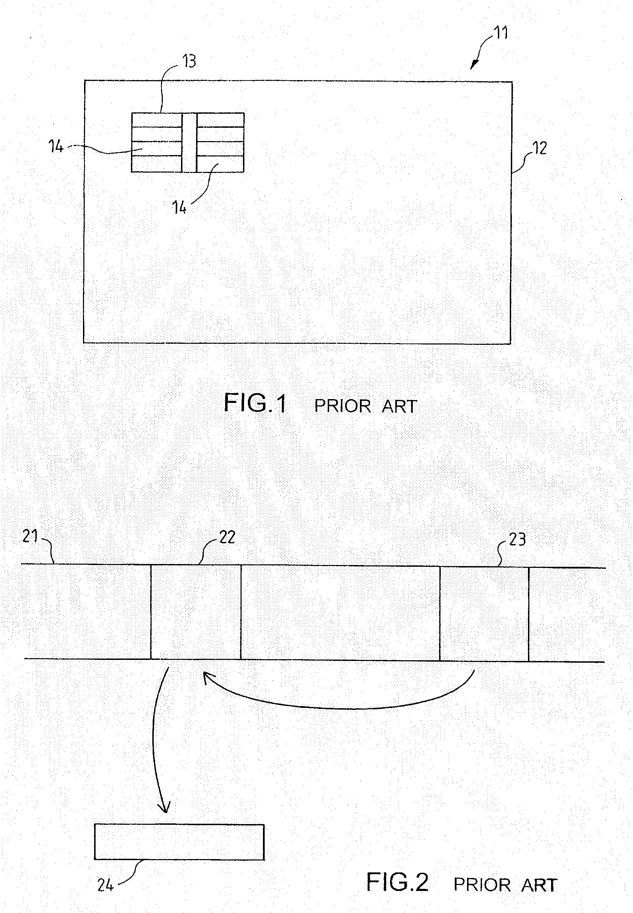

FIG. 1 illustrates a typical smartcard from prior art. The smartcard 11 comprises a plastic card 12 and an embedded microchip 13 that allows to securely store secret information. The microchip 13 comprises pins 14 allowing to communicate with an outside device, e.g. a digital television decoder that comprises a smartcard reading device. The smartcard 11 may typically transmit a plurality of messages to the decoder (not represented in FIG. 1).

FIG. 2 illustrates an example of a system for transmitting output data from a smartcard to a decoder, according to prior art. The output data to be transmitted are initially stored in a source memory 23 of the smartcard.

A filling operation consists in reading at a determined address of the source memory 23 the output data and in further writing the read output data into an input/output buffer 22. The source memory 23 and the input/output buffer 22 may be parts of a single global memory 21 as represented in FIG. 2, or may be parts of distinct memories.

Buffer data stored in the input/output buffer 22, i.e. the output data, are read at an address of the buffer and are transmitted to an input/output port 24, thus achieving a purge operation.

Typically the buffer data are transmitted by blocks of eight bits so as to fill an eight bits long data register (not represented on FIG. 2) of the input/output port 24. Each bit of the data register corresponds to an associated pin of the smartcard. When configured as an output pin, each associated pin has a value that depends on the value at the associated bit of the data register.

The output data to be transmitted are initially located at a determined address of the source memory 23.

However, a hacker may try to read extra-source data that are initially stored at an address distinct from the determined address of the source memory 23, or extra-buffer data that are stored at an address distinct from the address of the input/output buffer 22. Typically, the extra-source data and the extra-buffer data are intended to remain secret. For example, the extra-source data may be a control word allowing to descramble scrambled audiovisual information.

In order to achieve the reading of data, the hacker may conduct an attack by changing a frequency of a clock of the smartcard, submitting the smartcard to an extreme temperature, changing a power voltage of the smartcard etc. The attack may alter a value of a given address, or a value of given data. The attack may either alter an executing of instructions by the smartcard, e.g. a given instruction is not executed, etc.

The attack may lead to various types of altering having various consequences. The hacker generally has no means to provide a control of the altering, and hence of the consequences. However, the altering may allow the hacker to read the extra-source data, the extra-buffer data etc.

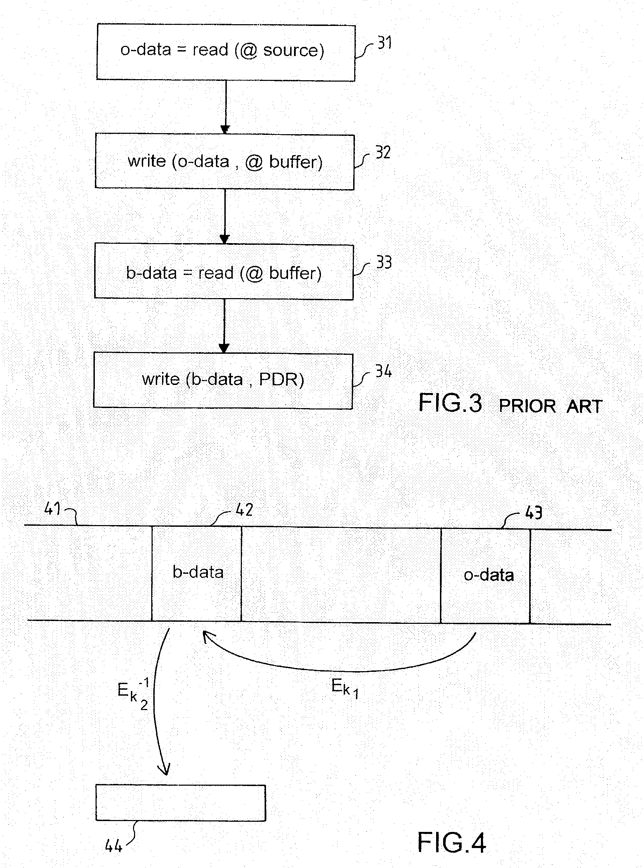

FIG. 3 illustrates an example of an algorithm to be executed by a smartcard according to prior art. The smartcard usually executes the following instructions :
- read at the determined address of the source memory output data (box 31);
- write the read output data into the input/output buffer (box 32) ;
- read buffer data at the address of the input/output buffer (box 33) ;
- write the read buffer data into the input/output port (box 34).

If the determined address of the source memory is altered by the attack at the reading (box 31), extra-source data are read and written into the input/output buffer. As a consequence, the purge operation leads to a transmitting of the extra-source data to the input/output port, thus allowing the hacker to read the extra-source data.

Similarly, if the attacks generates an altering of the address of the input/output buffer at the reading of the buffer data (box 33), the purge operation leads to a transmitting of extra-buffer data stored outside of the input/output buffer, thus allowing the hacker to read the extra-buffer data.

In order to secure the smartcard, additional instructions may be introduced. The additional instructions may for example be consistency tests, or redundancy instructions.

A consistency test may comprise calculating a difference between an address of a beginning of a source memory and an address of an end of the source memory. The consistency test may further comprise comparing the difference to a predetermined size of the source memory. If the difference is greater than the predetermined size, it is considered that extra-source data stored outside the source memory are read and the executing of the instructions may be stopped.

A redundancy instruction has no consequence when executed. For example, a Boolean test is executed and a single further instruction is executed whatever a result of the Boolean test. An attack altering the Boolean test hence have no consequence on the executing of the instructions and fails to provide extra-source data or extra-buffer data to the hacker.

### Summary of Invention

In a first aspect the invention provides a method for securing a portable security module for use with a decoding element. The portable security module and the decoding element allow to descramble scrambled information. The method comprises encrypting with an encrypting key output data to be transmitted out of the portable security module. The encrypted output data is written as buffer data into an input/output buffer of the portable security module. The buffer data is decrypted with a decrypting key. The decrypting key allows to decrypt data encrypted with the encrypting key. The decrypted buffer data is transmitted to an input/output port of the portable security module.

In a first preferred embodiment the method further comprises reading the output data at a determined address of a source memory, picking a random key, and determining the encrypting key and the decrypting key from at least the random key.

In a second preferred embodiment the encrypting key and the decrypting key are equal to the random key.

In a third preferred embodiment the method further comprises calculating a first key as a determined function of the random key and of the determined address of a source memory . The first key is written as the decrypting key into a volatile memory and the encrypting key is calculated as the determined function of the random key and of the determined address of the source memory.

In a fourth preferred embodiment the portable security module is a smartcard, the decoding element is a decoder; and the scrambled information is scrambled audiovisual information.

In a second aspect the invention provides a portable security module for use with a decoding element. The portable security module and the decoding element allow to descramble scrambled information. The portable security module comprises encrypting means to encrypt with an encrypting key output data to be transmitted out of the portable security module, and an input/output buffer, the input/output buffer allowing to store the encrypted output data as buffer data. The portable security module further comprise decrypting means to decrypt the buffer data located at the input/output buffer with a decrypting key, the decrypting key allowing to decrypt data encrypted with the encrypting key, transmitting means to transmit the decrypted buffer data to an input/output port of the portable security module.

In a fifth preferred embodiment, the portable security module further comprises a source memory allowing to store the output data and picking means allowing to pick a random key.

In a sixth preferred embodiment the encrypting key and the decrypting key are equal to the random key.

In a seventh preferred embodiment the portable security modulefurther comprises calculating means to calculate a first key as a determined function of the random key and of a determined address of the source memory, and a volatile memory allowing to store the first key as the decrypting key. Determining means allow determine the encrypting key as the determined function of the random key and of the determined address of the source memory. Reading means allow to read the decrypting key at an address of the volatile memory.

In an eight preferred embodiment the portable security module is a smartcard, the decoding element is a decoder; and the scrambled information is scrambled audiovisual information.

Other aspects and advantages of the invention will be apparent from the following description and the appended claims.

### Brief Description of Drawings

FIG. 1 illustrates a typical smartcard from prior art.
FIG. 2 illustrates an example of a system for transmitting output data from a smartcard to a decoder, according to prior art.
FIG. 3 illustrates an example of an algorithm to be executed by a smartcard according to prior art.
FIG. 4 illustrates an example of a system for securing a portable security module according to the present invention.
FIG. 5 illustrates an example of an algorithm to be executed by a portable security module according to a first embodiment of the present invention.
FIG. 6 illustrates an example of an algorithm to be executed by a portable security module according to a second embodiment of the present invention.

### Detailed Description

A transmitting of output data stored in a source memory of a portable security module is performed by copying the output data from the source memory to an input/output buffer, and by transmitting buffer data located at an address of the input/output buffer, i.e. the output data, to an input/output port.

An attack performed by a hacker may lead to various alterings having various consequences, and among them, an access to extra-source data or extra-buffer data by the hacker.

Additional instructions may be introduced so as to reinforce a securing of the portable security module. However, the additional instructions only render the portable security module less vulnerable under the attacks. A given attack is less likely to generate an altering, and hence is less likely to allow the access to the secret data. The hacker may achieve the accessing by providing a high number of attacks.

There is a need for a method and an apparatus allowing to reliably secure the portable security module against attacks.

FIG. 4 illustrates an example of a system for securing a portable security module according to the present invention. The portable security module, e.g. a smartcard, when associated with a decoding element, e.g. a decoder, allows to descramble scrambled information. Output data to be transmitted out of the smartcard are encrypted with an encrypting key K₁. The encrypted output data are written into an input/output buffer 42 of the smartcard. Buffer data located at the input/output buffer 42 are decrypted with a decrypting key K₂. The decrypting key K₂ allows to decrypt data encrypted with the encrypting key K₁. The decrypted buffer data are transmitted to an input/output port 44 of the smartcard using transmitting means (not represented) of the smartcard.

The smartcard hence comprises encrypting means (not represented) and decrypting means (not represented) to respectively allow the encrypting of the output data and the decrypting of the buffer data. The encrypting means and the decrypting means may for example be implemented within a dedicated processing unit of the smartcard.

If a given attack achieves to alter an address of the input/output buffer 42 at the decrypting, the buffer data located at the altered address are distinct from the encrypted output data. The buffer data fail to be encrypted with the encrypting key K₁. As a consequence, the decrypting of the buffer data with the decrypting key K₂ and the transmitting of the decrypted buffer data may provide nonsense data to the hacker.

A single altering of the address of the input/output buffer 42 fails to allow an access to decrypted secret data. A first altering of the address of the input/output buffer 42 at the writing of the encrypted output data, may allow the access to the decrypted secret data if coordinated with a second altering of the address of the input/output buffer 42 at the decrypting. However, such event has very little opportunity to occur with the attacks of the hacker.

The output data may initially be stored in a source memory 43 of the smartcard. The source memory 43 and the input/output buffer 42 may be parts of a single global memory 41 as represented in FIG. 4, or may be parts of distinct memories.

Preferably the scrambled information is scrambled audiovisual information. Alternatively, the smartcard may allow to descramble a distinct type of scrambled information.

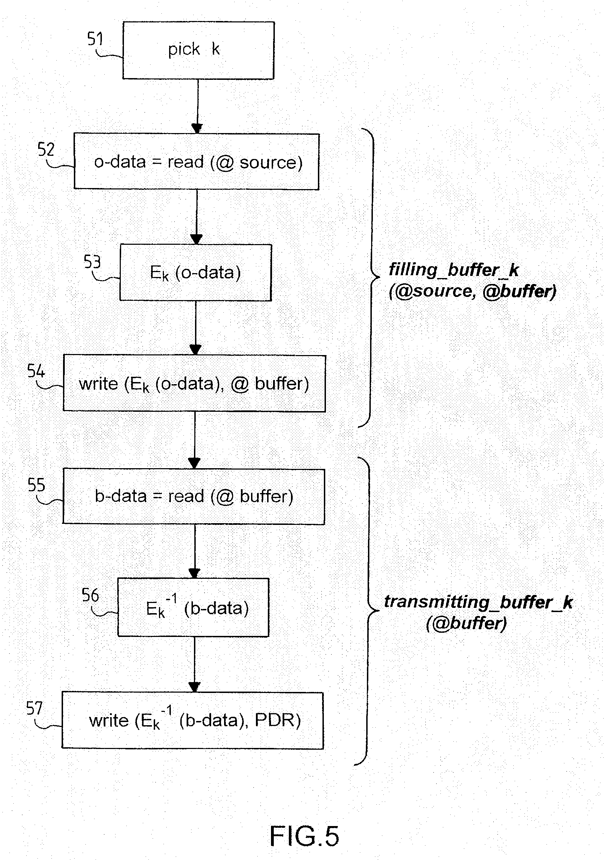

FIG. 5 illustrates an example of an algorithm to be executed by a portable security module according to a first embodiment of the present invention.

A random key ***k*** is picked (box 51).

The following instructions are executed during a filling operation :
- read output data ***o-data*** at a determined address of a source memory (box 52);
- encrypt the read output data with the random key **k** (box 53); an encrypting key is hence determined from the random key as being equal to the random key.
- write the encrypted output data into the input/output buffer (box 54);

Such instructions may be implemented within a filling function ***filling_buffer_k(@source, @buffer)*** that depends on the determined address of the source memory and on an address of the input/output buffer.

During a purge operation, the following instructions are executed :
- read buffer data ***b-data*** at an address of the input/output buffer (box 55); under proper conditions, the buffer data are the encrypted output data;
- decrypt the buffer data using the random key ***k*** (box 56); a decrypting key is hence determined from the random key as being equal to the random key.
- write the decrypted buffer data into an input/output port *PDR* (box 57).

The instructions of the purge operation may be implemented within a purge function ***transmitting_buffer_k(@buffer)*** that depends only of the address of the input/output buffer.

Both the filling function ***filling_buffer_k(@source, @buffer)*** and the purge function ***transmitting_buffer_k(@buffer)*** depend on the address of the input/output buffer.

As a consequence, if, at an executing of the filling function ***filling_buffer_k(@source, @buffer),*** the address of the input/output buffer is altered under an attack, the purge function ***transmitting_buffer_k(@buffer)*** is executed with a proper address of the input/output buffer. A hacker hence accesses only previous data that are previously stored within the input/output buffer.

If, at an executing of the purge function ***transmitting_buffer_k(@buffer),*** the address of the input/output buffer is altered under the attack, the filling function ***filling_buffer_k(@source, @buffer)*** is executed with a proper address of the input/output buffer. A hacker hence accesses the extra-buffer data, i.e. data that are stored outside the input/output buffer, but in a decrypted form. The purge function ***transmitting_buffer_k(@buffer)*** indeed comprises a decrypting of the buffer data with the random key ***k.*** As the random key ***k*** is unknown, the hacker fails to access the extra-buffer data.

Alternatively, an asymmetric encrypting algorithm may be used, i.e. the encrypting key and the decrypting key are distinct. For example, the encrypting key equals the random key and the decrypting key is determined from the random key such that the decrypting key allows to decrypt data encrypted with the encrypting key.

The method according to the first embodiment of the present invention allows to protect the portable security module, e.g. a smartcard, against an altering of the address of the input/output buffer. However, if the determined address of the source memory is altered under the attacks, extra-source data, i.e. data initially located outside the source memory, are encrypted and written into the input/output buffer, thus allowing the hacker to undo the decrypting and access the extra-source data.

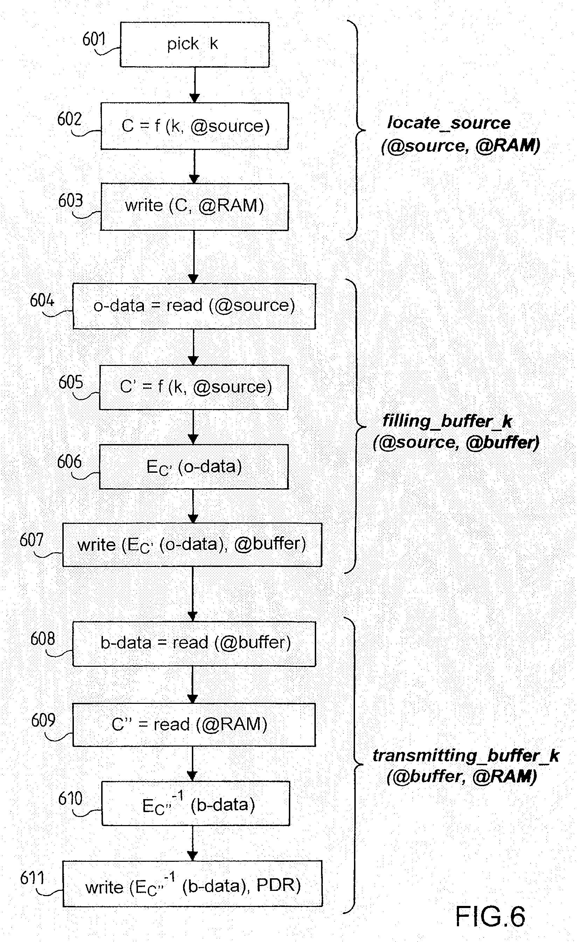

FIG. 6 illustrates an example of an algorithm to be executed by a portable security module according to a second embodiment of the present invention.

A random key k is picked (box 601) using picking means of the portable security module, e.g. a smartcard. Determining means allow to calculate a first key ***C*** as a determined function ***f(k, @source)*** of the random key ***k*** and of a determined address of a source memory (box 602). The first key ***C*** is written into a volatile memory (box 603), e.g. a Random Access Memory (RAM). Such instructions may be implemented within a single locating function ***locate_source(@source, @RAM)*** that depends on the determined address of the source memory and on the address of the RAM memory.

The following instructions are executed during a filling operation :
- read output data ***o-data*** at the determined address of the source memory (box 604) ;
- calculate an encrypting key ***C'*** as the determined function ***f(k, @source)*** of the random key ***k*** and of the determined address of the source memory (box 605) ;
- encrypt the read output data ***o-data*** with the encrypting key ***C'*** (box 606);
- write the encrypted output data into the input/output buffer (box 607).

Such instructions may be implemented within a filling function ***filling_buffer_k(@source, @buffer)*** that depends on the determined address of the source memory and on an address of the input/output buffer.

During a purge operation, the following instructions are executed :
- read buffer data ***b-data*** at an address of the input/output buffer (box 608); under proper conditions, the buffer data are the encrypted output data;
- read at the address of the RAM memory a decrypting key C" (box 609); the decrypting key equals the first key ***C*** under proper conditions;
- decrypt the buffer data ***b-data*** using the decrypting key ***C"*** (box 610);
- write the decrypted buffer data into an input/output port ***PDR*** (box 611).

The instructions of the purge operation may be implemented within a purge function ***transmitting_buffer_k(@buffer, @RAM)*** that depends of the address of the input/output buffer and on the address of the RAM memory.

As the method of the first embodiment of the present invention, the example method of FIG. 6 allows to prevent a hacker from accessing extra-buffer data, i.e. data that are stored outside the input/output buffer, even if the address of the input/output buffer is altered under an attack.

Furthermore, if the determined address of the source memory is altered at the calculating of the first key C (box 602), the first key C has an improper value. However, the encrypting key C' is calculated (box 605) with a proper value of the determined address of the source memory and the output data are correctly encrypted (box 606). Subsequently, at the reading of the RAM memory (box 609), the decrypting key C" equals the first key C and the buffer data fail to be correctly decrypted (box 610). The hacker fails to access clear data.

Similarly, if the determined address of the source memory is altered at the filling operation, the encrypting key C' has an improper value and the hacker fails to access extra-source data, i.e. data initially located outside the source memory.

A single altering of the determined address of the source memory or of the address of the input/output buffer fails to provide to the hacker the extra-source data or the extra-buffer data. At least two coordinated alterings are necessary to allow the access to the extra-buffer data or to the extra-source data, which is particularly difficult to achieve, even with a high number of attacks.

Alternatively, an asymmetric encrypting algorithm may be used, i.e. the encrypting key and the decrypting key are distinct. For example, the encrypting key is determined as a second function of the random key and of the determined address of the source memory. The encrypting key is distinct from the first key, i.e. from the decrypting key under proper conditions. The second function allows to determine the encrypting key such that the decrypting key allows to decrypt data encrypted with the encrypting key. The second function may for example allow to determine the encrypting key depending on an intermediate parameter generated at the calculating of the first key.

Because of a length of the source memory, the determined address of the source memory may comprise a plurality of parameters, e.g. an address of a beginning of the source memory, a predetermined size of the source memory, an address of an end of the source memory etc. The smartcard of the present invention may comprise consistency tests and redundancy instructions so as to reinforce a securing of the smartcard.

The instructions to be executed by the smartcard may be enclosed within a conditional loop. Typically, a variable is compared to the beginning of the source memory and to the end of the source memory before any reading of the source memory; the variable is incremented at each executing of the conditional loop.

The method of the present invention may be implemented within a hardware block of a smartcard, e.g. an Universal Asynchronous Receiver Transmitter (UART) that allows to control transmissions through a serial port.

The encrypting may be performed with any encrypting algorithm; an encrypting algorithm allowing to encrypt one bit at a time, e.g. a stream cipher algorithm, is particularly well adapted. An encrypting algorithm allowing to encrypt a small block of bits at a time, e.g. eight bits, may also be used.

The portable security module of the present invention may be used in any system, e.g. a digital TV system, a mobile phone system etc..

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for securing a portable security module for use with a decoding element, the portable security module and the decoding element allowing to descramble scrambled information, the method comprising :
encrypting with an encrypting key output data to be transmitted out of the portable security module (53, 606) ;
writing as buffer data the encrypted output data into an input/output buffer of the portable security module (54, 607) ;
decrypting the buffer data with a decrypting key (56, 610), the decrypting key allowing to decrypt data encrypted with the encrypting key ;
transmitting the decrypted buffer data to an input/output port of the portable security module (57, 611).

2. The method according to claim 1, further comprising :
reading the output data at a determined address of a source memory (52, 604);
picking a random key (51, 601) ;
determining the encrypting key and the decrypting key from at least the random key.

3. The method according to claims 2, wherein :
the encrypting key and the decrypting key are equal to the random key.

4. The method according to claim 2, further comprising :
calculating a first key as a determined function of the random key and of the determined address of a source memory (602) ;
writing as the decrypting key the first key into a volatile memory (603) ;
calculating the encrypting key as the determined function of the random key and of the determined address of the source memory (605).

5. The method according to any one of claims 1 to 4, wherein :
the portable security module is a smartcard ;
the decoding element is a decoder; and
the scrambled information is scrambled audiovisual information.

6. A portable security module for use with a decoding element, wherein the portable security module and the decoding element allow to descramble scrambled information, the portable security module comprising:
encrypting means to encrypt with an encrypting key output data to be transmitted out of the portable security module;
an input/output buffer (42), the input/output buffer allowing to store the encrypted output data as buffer data;
decrypting means to decrypt the buffer data located at the input/output buffer with a decrypting key, the decrypting key allowing to decrypt data encrypted with the encrypting key ;
transmitting means to transmit the decrypted buffer data to an input/output port (44) of the portable security module.

7. The portable security module according to claim 5, further comprising:
a source memory (43) allowing to store the output data ;
picking means allowing to pick a random key.

8. The portable security module according claims 7, wherein :
the encrypting key and the decrypting key are equal to the random key.

9. The portable security module according to claim 7, further comprising :
calculating means to calculate a first key as a determined function of the random key and of a determined address of the source memory;
a volatile memory allowing to store the first key as the decrypting key;
determining means to determine the encrypting key as the determined function of the random key and of the determined address of the source memory ;
reading means to read the decrypting key at an address of the volatile memory.

10. The portable security module of any one of claims 6 to 9, wherein :
the portable security module is a smartcard ;
the decoding element is a decoder; and
the scrambled information is scrambled audiovisual information.
